# EUROPEAN PATENT APPLICATION

(11) **EP 2 866 205 A2**
(43) Date of publication of application: **29.04.2015**
(21) Application number: 14189959.1
(22) Date of filing: 22.10.2014
(51) Int. Cl.: G06T 17/10, G06T 19/20

(54) **Three-dimensional model generation apparatus, three-dimensional model generation method, and program**

(30) Priority: 25.10.2013 JP 2013222481
(71) Applicant: Hitachi, Ltd., Tokyo 100-8280 (JP); Computer And Automation Research Institute Hungarian Academy of Sciences, Budapest 1111 (HU)
(72) Inventor: Katsumura, Yoshiteru, Chiyoda-ku, Tokyo 100-8280 (JP); Nakano, Takahiro, Chiyoda-ku, Tokyo 100-8280 (JP); Nonaka, Youichi, Chiyoda-ku, Tokyo 100-8280 (JP); Erdos, Gabor, 1111 Budapest (HU); Vancza, Jozsef, 1111 Budapest (HU); Laszio, Monostori, 1111 Budapest (HU)
(74) Representative: Moore, Graeme Patrick

(57) **Abstract**

Provided is a technology capable of generating a three-dimensional model from measured data. A three-dimensional model generation apparatus includes: a storage unit which stores a three-dimensional model of a structure and a three-dimensional measurement value of the structure; a segment generation unit which generates a plurality of segments by dividing the three-dimensional model; a connection relationship specification unit which specifies a connection relationship of the generated plurality of segments; a shape characteristic specification unit which specifies, based on a part of the plurality of segments and other segments of the plurality of segments specified by the connection relationship and connected to the part of the plurality of segments, a shape characteristic of the three-dimensional model formed from the plurality of segments; a shape information specification unit which specifies shape information defining the specified shape characteristic; an orientation specification unit which specifies an orientation of the structure based on a distance between a structure matching the specified shape characteristic and the specified shape information, and the three-dimensional measurement value; and a model generation unit which generates a three-dimensional model based on the specified shape characteristic, the specified shape information, and the specified orientation.

## Description

### Background of the Invention

The present invention relates to a three-dimensional model generation technology.

In Japanese Patent Laid-open Publication No. 2009-129189, there is disclosed a three-dimensional object recognition method for detecting a three-dimensional position and orientation of an object by referring to scene data measured with a sensor capable of measuring distance and model data that represents a three-dimensional shape of a target object regarding a characteristic amount representing a local surface shape of the object. When a model is arranged in a candidate position and orientation, the method calculates whether or not the scene data exists in a range that is masked by the model and is originally unable to be measured, and based on whether or not there are any geometric discrepancies, verifies the correctness of the position and orientation candidate for the model.

The technology disclosed in Japanese Patent Laid-open Publication No. 2009-129189 detects the orientation based on the scene data measured with a sensor capable of measuring distance and the model data that represents a three-dimensional shape. However, in the technology disclosed in Japanese Patent Laid-open Publication No. 2009-129189, a three-dimensional model cannot be generated from the measured data.

### Summary of the Invention

Accordingly, the present invention has an object to provide a technology capable of generating a three-dimensional model from measured data.

The present invention includes a plurality of measures for achieving the above-mentioned object, and as one example thereof, there is provided a storage unit which stores a three-dimensional model of a structure and a three-dimensional measurement value of the structure; a segment generation unit which generates a plurality of segments by dividing the three-dimensional model; a connection relationship specification unit which specifies a connection relationship of the generated plurality of segments; a shape characteristic specification unit which specifies, based on a part of the plurality of segments and other segments of the plurality of segments specified by the connection relationship and connected to the part of the plurality of segments, a shape characteristic of the three-dimensional model formed from the plurality of segments; a shape information specification unit which specifies shape information defining the specified shape characteristic; an orientation specification unit which specifies an orientation of the structure based on a distance between a structure matching the specified shape characteristic and the specified shape information, and the three-dimensional measurement value; and a model generation unit which generates a three-dimensional model based on the specified shape characteristic, the specified shape information, and the specified orientation.

According to one embodiment of the present invention, a three-dimensional model can be generated from measured data. Other objects, configurations, and advantageous effects than those described above are made clear based on the following embodiment.

### Brief Description of the Drawings

FIG. 1 is an example of a configuration diagram of a three-dimensional model generation apparatus according to an embodiment of the present invention.
FIG. 2 is an example of data stored in a three-dimensional model storage unit.
FIG. 3 is a hardware configuration example of the model generation apparatus.
FIG. 4 is an operation example of the model generation apparatus.
FIG. 5A illustrates dividing a three-dimensional model into segments, and FIG. 5B illustrates specifying a connection relationship of the segments.
FIG. 6 is an example of a processing flow for specifying a shape characteristic and for specifying shape information.
FIG. 7A illustrates determining a cylinder shape characteristic, and FIG. 7B illustrates shape information to be specified.
FIG. 8A illustrates determining a ring shape characteristic, and FIG. 8B illustrates shape information to be specified.
FIG. 9A illustrates determining a cone shape characteristic, and FIG. 9B illustrates shape information to be specified.
FIG. 10A illustrates determining a rectangular object shape characteristic, and FIG. 10B illustrates shape information to be specified.
FIG. 11 illustrates a distance from a measurement value and specifying an orientation of a shape characteristic.
FIG. 12 is an example of a screen to be output.
FIG. 13 is an example of a screen displaying detailed information.

### Description of the Preferred Embodiment

An embodiment of the present invention is described below in detail with reference to the drawings. In the following description, parts having the same configuration are denoted with the same reference symbols, and repeated description of such parts is omitted.

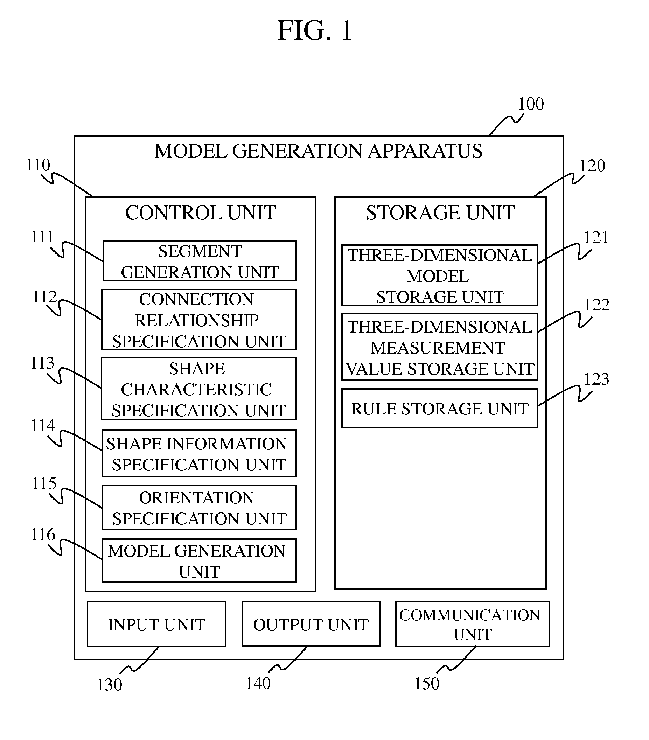

FIG. 1 is an example of a configuration diagram of a three-dimensional model generation apparatus 100 according to this embodiment. The three-dimensional model generation apparatus 100 includes a control unit 110, a storage unit 120, an input unit 130, an output unit 140, a communication unit 150, and the like.

The storage unit 120 includes a three-dimensional model storage unit 121, a three-dimensional measurement value storage unit 122, a rule storage unit 123, and the like. The three-dimensional model storage unit 121 stores a three-dimensional model of a structure, for example.

An example of the data stored in the three-dimensional model storage unit 121 is described below.

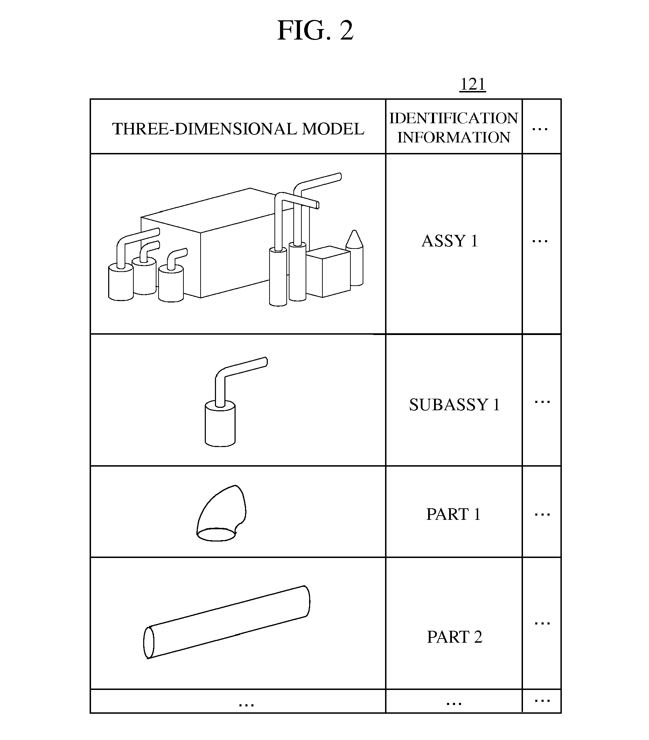

FIG. 2 is an example of the data stored in the three-dimensional model storage unit 121. The three-dimensional model storage unit 121 stores a three-dimensional model of a structure, and identification information associated with the three-dimensional model. The specific mode of the three-dimensional model is not especially limited. For example, the three-dimensional model may be the same as a publicly known three-dimensional model. Specific examples of the three-dimensional model include information about xyz coordinates defining the lines, faces, points, and the like forming the structure, arbitrary attribute information, and the like. Further, the identification information may be a name, an identification number, or a combination thereof, specifying the structure itself or another structure (e.g., a component, a sub-assembly, etc.) forming the structure.

As is clear from FIG. 2, in the three-dimensional model storage unit 121, one structure is formed from a plurality of structures, such as a sub-assembly and components. However, the present invention is not limited thereto. The structure may be formed from only a single structure.

An example of the data in the three-dimensional model storage unit 121 is shown in FIG. 2 to help in the description of the present invention. The present invention is not limited thereto. Further, the data structure for realizing the three-dimensional model storage unit 121 is arbitrary, and the data structure is not limited to the structure described above.

Returning to FIG. 1, the three-dimensional measurement value storage unit 122 stores a three-dimensional measurement value group, for example, obtained by measuring an actually-existing structure. Specifically, the three-dimensional measurement value storage unit 122 stores, for example, a set of xyz coordinates acquired by measuring the structure based on an arbitrary publicly known technology, such as using an object sensor. The rule storage unit 123 stores conditions and the like for determining the shape characteristic to be described later.

As is clear from the above description, the specific target structure is not limited, as long as the structure has three dimensions. Further, the specific mode of the three-dimensional model is also not limited, as long as the three-dimensional model includes information representing the three-dimensional shape of the structure, such as three-dimensional CAD model data.

The control unit 110 includes a segment generation unit 111, a connection relationship specification unit 112, a shape characteristic specification unit 113, a shape information specification unit 114, an orientation specification unit 115, a model generation unit 116, and the like.

The segment generation unit 111 generates segments by dividing the three-dimensional model stored in the three-dimensional model storage unit 121. The connection relationship specification unit 112 specifies the connection relationship of the segments generated by the segment generation unit 111. Based on a part of the segments and other segments connected to the part of segments, the shape characteristic specification unit 113 specifies the shape characteristic of the three-dimensional model formed from the segments. The shape information specification unit 114 specifies shape information relating to the shape characteristic specified by the shape characteristic specification unit 113. Examples of this shape information include, but are not limited to, a numerical value representing a position, dimension, and the like of the shape characteristic. The orientation specification unit 115 determines whether or not a portion of the three-dimensional model matching the shape characteristic and the shape information exists as a structure based on whether or not there is a three-dimensional measurement value matching the shape characteristic. When there is a matching structure, the orientation specification unit 115 specifies the orientation of the shape characteristic corresponding to the three-dimensional model based on the distance between the three-dimensional model and the measurement value stored in the three-dimensional measurement value storage unit 122. The model generation unit 116 generates the three-dimensional model of the structure based on the shape characteristic, the shape information, the orientation, and the like. Detailed descriptions thereof are described later.

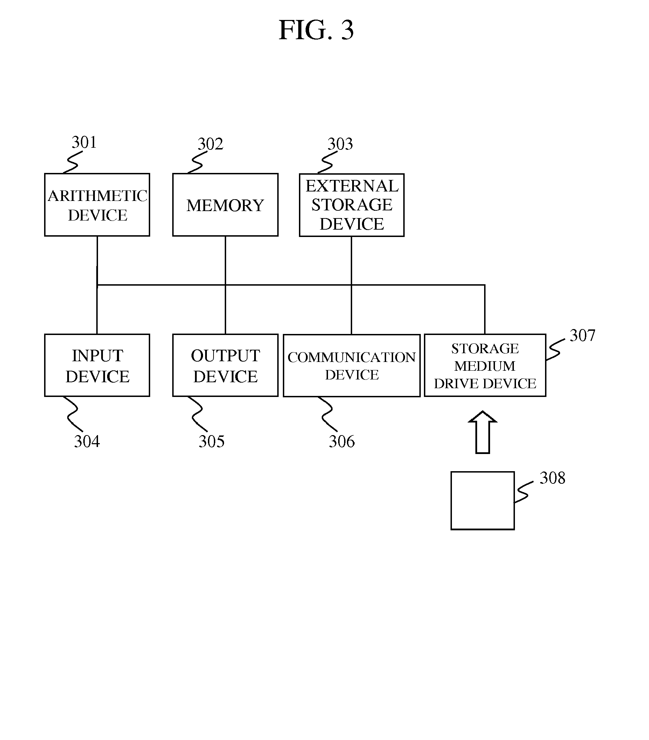

Next, a hardware configuration example for realizing the three-dimensional model generation apparatus 100 is described. FIG. 3 is a hardware configuration example of the three-dimensional model generation apparatus 100.

Each three-dimensional model generation apparatus 100 includes an arithmetic device 301, a memory 302, an external storage device 303, an input device 304, an output device 305, a communication device 306, a storage medium drive device 307, and the like.

The arithmetic device 301 is, for example, a central processing unit (CPU). The memory 302 is a volatile and/or non-volatile memory. The external storage device 303 is a hard disk drive (HDD), a solid state drive (SSD), and the like. The storage medium drive device 307 is capable of reading and writing information from and to, for example, a compact disc (CD), a digital versatile disc (DVD), and another arbitrary portable storage medium 308. The input device 304 is a keyboard, a mouse, a microphone, and the like. The output device 305 is, for example, a display device, a printer, a speaker, and the like. The communication device 306 is, for example, a network interface card (NIC) for connecting to a communication network (not shown).

Each device in the control unit 110 can be realized by loading a predetermined program into the memory 302 and executing the loaded program by the arithmetic device 301.

This predetermined program may also be downloaded from the storage medium 308 via the storage medium drive device 307, or from a communication network via the communication device 306, onto the external storage device 303, loaded into the memory 302, and executed by the arithmetic device 301. Further, the predetermined program may also be directly loaded onto the memory 302 from the storage medium 308 via the storage medium drive device 307, or from the communication network via the communication device 306, and executed by the arithmetic device 301.

Alternatively, a part or all of devices in the control unit 110 may be realized as hardware by a circuit and the like.

The storage unit 120 can be realized from all or a part of the memory 302, the external storage device 303, the storage medium drive device 307, the storage medium 308, and the like. Further, the storage unit 120 may be realized by controlling all or a part of the memory 302, the external storage device 303, the storage medium drive device 307, the storage medium 308, and the like based on execution of the above-mentioned program by the arithmetic device 301.

The input unit 130 can be realized by the output device 305. Further, the input unit 130 may be realized by controlling the output device 305 based on execution of the above-mentioned program by the arithmetic device 301.

The output unit 140 can be realized by the input device 304. Further, the output unit 140 may be realized by controlling the input device 304 based on execution of the above-mentioned program by the arithmetic device 301.

The communication unit 150 can be realized by the communication device 306. Further, the communication unit 150 may be realized by controlling the communication device 306 based on execution of the above-mentioned program by the arithmetic device 301.

Each device in the three-dimensional model generation apparatus 100 may be realized from one device, or a plurality of distributed devices.

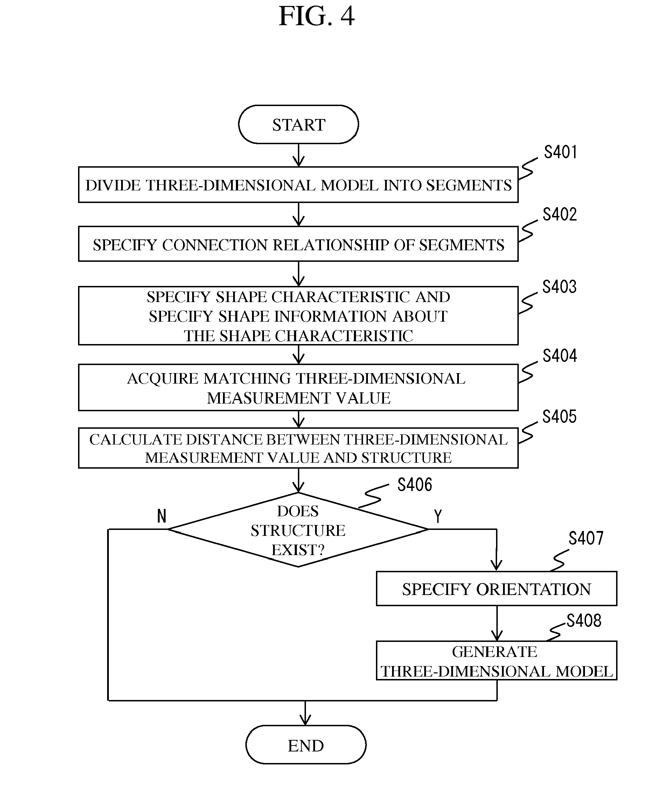

Next, an operation example is described. FIG. 4 is an operation example of the three-dimensional model generation apparatus 100. Here, the three-dimensional model generation apparatus 100 is described as performing the following processing for each structure.

The segment generation unit 111 reads the three-dimensional model from the three-dimensional model storage unit 121, and divides the three-dimensional model into segments (S401). The segments are, for example, polygon meshes that have elements such as edges, vertices, and faces. Examples of technologies for dividing the three-dimensional model into segments include, but are not especially limited to, arbitrary publicly known technologies, such as a Delaunay triangulation method and a Bubble mesh method. Alternatively, the three-dimensional model may also be divided into segments based on arbitrary information included in the three-dimensional model.

In the below description, although the polygon meshes are described as triangle meshes, naturally the polygon meshes are not limited to a triangular shape. Polygon meshes having a different polygonal shape may also be employed.

The connection relationship specification unit 112 specifies connected segments, and generates a graph network representing a connection relationship of the segments (S402).

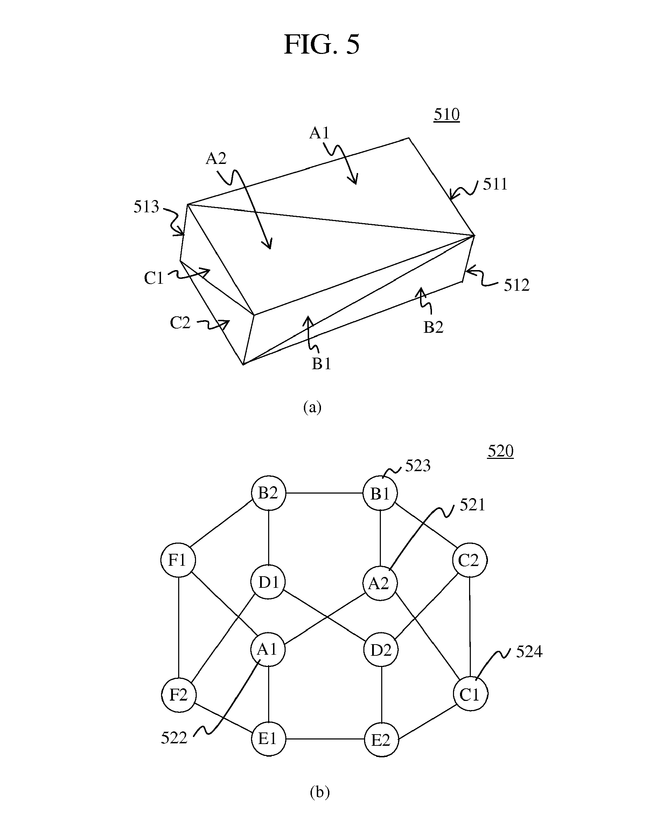

A specific example of Steps S401 and S402 is described below with reference to FIGS. 5A and 5B. FIG. 5A illustrates dividing a three-dimensional model into segments and FIG. 5B illustrates specifying a connection relationship of the segments.

A rectangular object 510 is an example of a rectangular object that has been divided into polygon meshes. A surface 511 of the rectangular object 510 is divided by the segment generation unit 111 into a mesh A1 and a mesh A2. Similarly, a surface 512 is divided into a mesh B1 and a mesh B2, and a surface 513 is divided into a mesh C1 and a mesh C2. For simplification, each of the other surfaces (not shown) is divided into two meshes in the same manner as described above.

As illustrated in FIG. 5A, the mesh A2 is connected to each of the mesh A1, the mesh B1, and the mesh C1. Further, the mesh B1 is connected to each of the mesh A2, the mesh B2, and the mesh C2.

The connection relationship specification unit 112 specifies which meshes each mesh is connected to. Although the technology for specifying the connection relationship of the meshes is not especially limited, the connection relationship may be determined based on, for example, whether or not a vertex of a given mesh is positioned on or near an edge of another mesh.

A graph network 520 is an example representing the connection relationship of each mesh of the rectangular object 510 in a graph network. The nodes of the graph network 520 represent the meshes of the rectangular object 510. For example, as described above, the mesh A2 is connected to the mesh A1, the mesh B1, and the mesh C1. A node 521, which represents the mesh A2, is connected to each of a node 522, a node 523, and a node 524, which represent the mesh A1, the mesh B1, and the mesh C1, respectively.

The connection relationship specification unit 112 stores information representing such a graph network in an arbitrary storage area.

Returning to FIG. 4, the shape characteristic specification unit 113 specifies the shape characteristic of the segments having the connection relationship specified by the processing of Step S402, and the shape information specification unit 114 specifies the shape information of the shape characteristic (S403). The shape characteristic represents the characteristics of the shape represented by the three-dimensional model. In this embodiment, a determination is made regarding which of one or more shape characteristics the structure matches. For example, the shape characteristic specification unit 113 specifies connected polygon meshes based on the graph network generated by the connection relationship specification unit 112, and sets the specified polygon meshes as a processing unit. Next, the shape characteristic specification unit 113 specifies a surface formed by a part of the polygon meshes of the processing unit, and specifies which shape characteristic the surface matches based on the surface and a characteristic section formed from other polygon meshes.

Examples of the shape characteristic may include at least one of a cylinder, a ring, a cone, and a rectangular object. However, the shape characteristic is naturally not limited to those examples, and may be other arbitrary three-dimensional shapes.

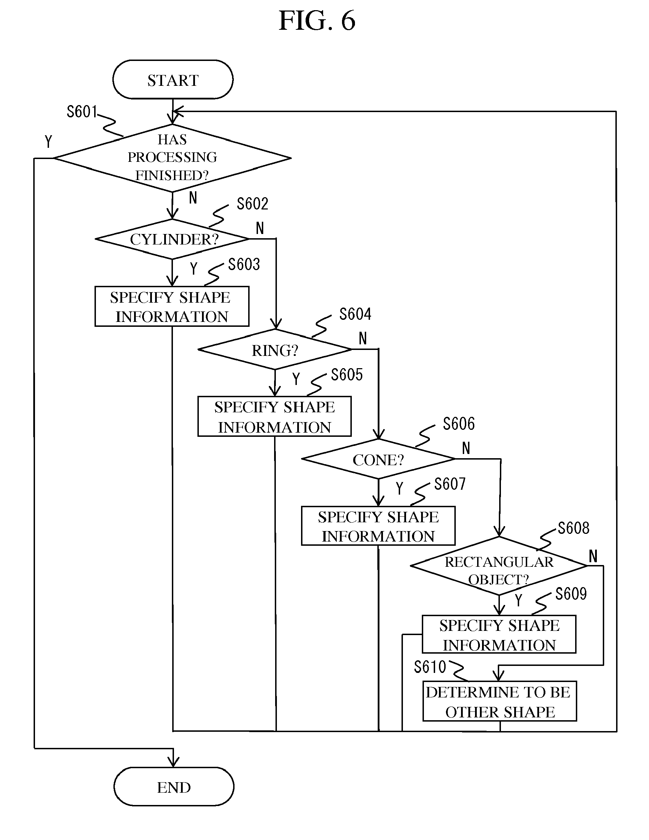

A processing example of Step S403 is now described in more detail. FIG. 6 is an example of a processing flow for specifying a shape characteristic and for specifying shape information.

The shape characteristic specification unit 113 determines whether or not processing has finished (S601). To carry out this determination, for example, the shape characteristic specification unit 113 determines whether or not the processing to be described below has been performed on all the polygon meshes having the connection relationship based on the graph network generated by the connection relationship specification unit 112. When it is determined in Step S601 that this processing has finished (S601: Yes), the processing proceeds to Step S403 onwards.

When it is determined in Step S601 that this processing has not finished (S601: No), the shape characteristic specification unit 113 determines whether or not the shape characteristic of the polygon meshes having the connection relationship is a cylinder (S602). When it is determined in Step S602 that the shape characteristic is not a cylinder (S602: No), the processing proceeds to Step S604 to be described below. On the other hand, when it is determined in Step S602 that the shape characteristic is a cylinder (S602: Yes), the shape information specification unit 114 specifies the shape information of the cylinder (S603), and the processing returns to Step S601.

The shape characteristic specification unit 113 determines whether or not the shape characteristic of the segments having the connection relationship is a ring (S604). When it is determined in Step S604 that the shape characteristic is not a ring (S604: No), the processing proceeds to Step S606 to be described below. On the other hand, when it is determined in Step S604 that the shape characteristic is a ring (S604: Yes), the shape information specification unit 114 specifies the shape information of the ring (S605), and the processing returns to Step S601.

The shape characteristic specification unit 113 determines whether or not the shape characteristic of the segments having the connection relationship is a cone (S606). When it is determined in Step S606 that the shape characteristic is not a cone (S606: No), the processing proceeds to Step S608 to be described below. On the other hand, when it is determined in Step S606 that the shape characteristic is a cone (S606: Yes), the shape information specification unit 114 specifies the shape information of the cone (S607), and the processing returns to Step S601.

The shape characteristic specification unit 113 determines whether or not the shape characteristic of the segments having the connection relationship is a rectangular object (S608). When it is determined in Step S608 that the shape characteristic is not a rectangular object (S608: No), the processing proceeds to Step S610 to be described below. On the other hand, when it is determined in Step S608 that the shape characteristic is a rectangular object (S608: Yes), the shape information specification unit 114 specifies the shape information of the rectangular object (S609), and the processing returns to Step S601.

The shape characteristic specification unit 113 determines that the shape characteristic of the segments having the connection relationship is none of a cylinder, a ring, a cone, or a rectangular object (Step S610), and the processing returns to Step S601.

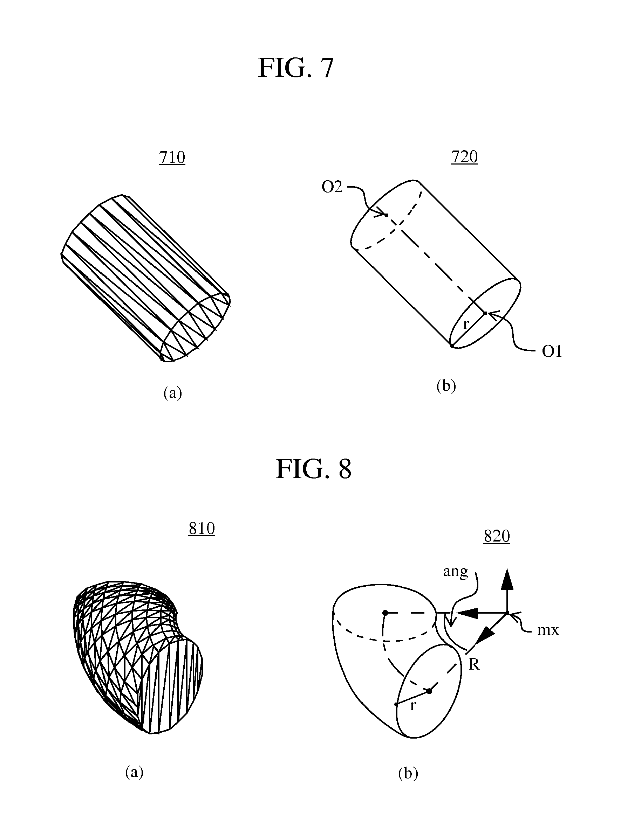

Here, determination of the shape characteristic and an example of the shape information to be specified are described in more detail. FIG. 7A illustrates determining a cylinder shape characteristic. FIG. 7B illustrates shape information to be specified.

A shape 710 is formed from polygon meshes having a connection relationship. To determine whether or not the shape characteristic is a cylinder, the shape characteristic specification unit 113 determines whether or not the shape 710 satisfies the following conditions.
i. Two roughly circular surfaces exist
ii. The two roughly circular surfaces are roughly parallel
iii. The diameters of the two roughly circular surfaces are roughly the same

When all of the above-mentioned conditions are satisfied, the shape characteristic specification unit 113 determines that the shape characteristic of the shape 710 is a cylinder.

The technology for determining whether or not connected polygon meshes form a surface is not especially limited, and any publicly known technology may be used. An example of the publicly known technology is to determine whether or not a surface is formed based on whether or not faces of adjacent polygon meshes have roughly the same normal. A cluster of polygon meshes forming a surface is referred to below also as a group.

Further, whether or not a surface formed by a group is a circle may be determined based on, for example, whether or not the shape of the periphery of the surface, namely, the shape formed by, among the edges of the polygon meshes belonging to a single group, the polygon meshes that are not positioned on or near the edges of other polygon meshes belonging to the same group, is a roughly circular shape.

Further, whether or not the roughly circular surfaces have roughly the same diameter may be determined by using at least one of the diameter, the radius, the circumference, and the like of the roughly circular surfaces.

A shape 720 indicates the shape information for defining a cylinder when it is determined that the shape characteristic of the shape 710 is a cylinder. The shape information specification unit 114 specifies the following, for example, as cylinder shape information.
- Start point of the cylinder
- End point of the cylinder
- Radius of the cylinder

The cylinder start point is information specifying a position on one of the two roughly circular surfaces. For example, the cylinder start point is the xyz coordinates of a center point of one of the roughly circular surfaces, or of a point near the center point. For the shape 720, the cylinder start point is, for example, the xyz coordinates of a center point O1. The cylinder end point is information specifying a position on the other of the two roughly circular surfaces. For example, the cylinder end point is the xyz coordinates of a center point of the other of the roughly circular surfaces, or of a point near the center point. For the shape 720, the cylinder end point is, for example, the xyz coordinates of a center point 02. Further, the cylinder radius is the radius of the roughly circular surfaces. For the shape 720, the cylinder radius is the value of a radius r, for example.

FIG. 8A illustrates determining a ring shape characteristic. FIG. 8B illustrates shape information to be specified.

A shape 810 is formed from connected polygon meshes. To determine whether or not the shape characteristic is a ring, the shape characteristic specification unit 113 determines whether or not the shape 810 satisfies the following conditions.
i. Two roughly circular surfaces exist
ii. The two roughly circular surfaces are not parallel
iii. The two roughly circular surfaces have roughly the same diameter
iv. One of the two roughly circular surfaces is roughly parallel to a z-axis direction in a local coordinate system that is defined based on the one roughly circular surface
v. A center of the other of the two roughly circular surfaces is located on an x-axis in the local coordinate system

When all of the above-mentioned conditions are satisfied, the shape characteristic specification unit 113 determines that the shape characteristic of the shape 810 is a ring.

The specific technology for the above-mentioned determination is the same as that described above, and hence a description thereof is omitted here.

A shape 820 indicates the shape information for defining a ring when it is determined that the shape characteristic of the shape 810 is a ring. The shape information specification unit 114 specifies the following, for example, as ring shape information.
- Origin of the local coordinate system
- Radius of curvature of the ring
- Radius of the ring tube
- Angle of curvature of the ring

The origin of the local coordinate system is a position in a coordinate system for specifying the position of the ring. For example, the origin of the local coordinate system is the xyz coordinates of a center point of the curvature of the ring, or of a point near the center point. For the shape 820, the origin of the local coordinate system is, for example, the xyz coordinates of a coordinate system mx. The radius of curvature of the ring is, for example, the distance from the local coordinate system to a center point of the roughly circular surfaces, or near to the center point. For the shape 820, the radius of curvature of the ring is, for example, the value of a radius R. The radius of the ring tube is, for example, the radius of the roughly circular surfaces. For the shape 820, the radius of the ring tube is, for example, the value of the radius r. Further, the angle of curvature of the ring is, for example, the angle formed by the two roughly circular surfaces. For the shape 820, the angle of curvature of the ring is, for example, the value of the angle ang.

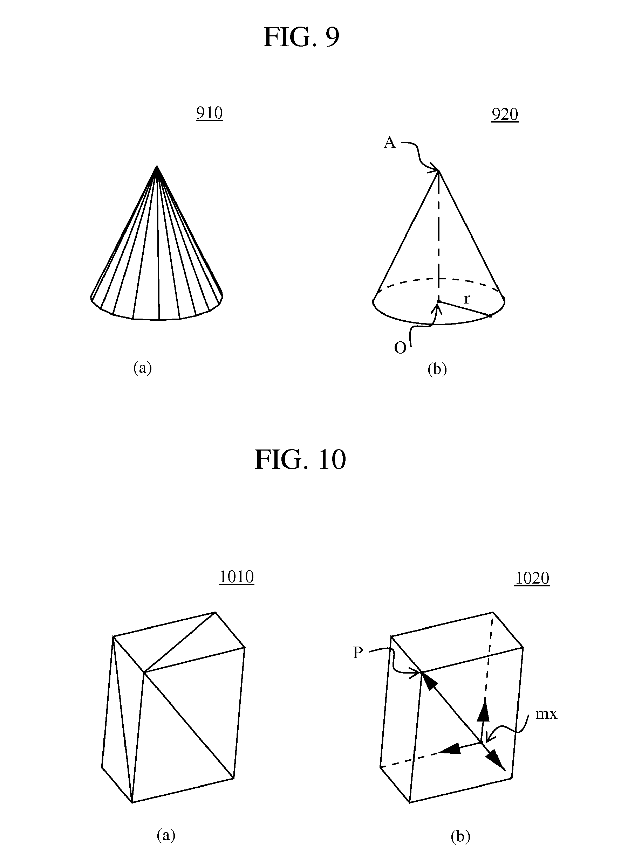

FIG. 9A illustrates determining a cone shape characteristic. FIG. 9B illustrates shape information to be specified.

A shape 910 is formed from connected polygon meshes. To determine whether or not the shape characteristic is a cone, the shape characteristic specification unit 113 determines whether or not the shape 910 satisfies the following conditions.
i. A roughly circular surface exists
ii. Triangular meshes that do not form a surface with adjacent polygon meshes have one common vertex

When all of the above-mentioned conditions are satisfied, the shape characteristic specification unit 113 determines that the shape characteristic of the shape 910 is a cone.

The specific technology for the above-mentioned determination is the same as that described above, and hence a description thereof is omitted here.

A shape 920 indicates the shape information for defining a cone when it is determined that the shape characteristic of the shape 910 is a cone. The shape information specification unit 114 specifies the following, for example, as cone shape information.
- Center point of the roughly circular surface
- Vertex of the cone
- Radius of the roughly circular surface

The center point of the roughly circular surface is, for example, the xyz coordinates of a center point of the roughly circular surface, or of a point near the center point. For the shape 920, the center point of the roughly circular surface is the xyz coordinates of a center point O. The vertex of the cone is, for example, the xyz coordinates of the vertex of the cone, or of a point near the vertex. For the shape 920, the vertex of the cone is, for example, the xyz coordinates of a vertex A. Further, the radius of the roughly circular surface is, for the shape 920, for example, the value of the radius r.

FIG. 10A illustrates determining a rectangular object shape characteristic, and FIG. 10B illustrates shape information to be specified.

A shape 1010 is formed from connected polygon meshes. To determine whether or not the shape characteristic is a rectangular object, the shape characteristic specification unit 113 determines whether or not the shape 1010 satisfies the following conditions.
i. Six surfaces exist
ii. Each of the six surfaces includes four corners
iii. Each of the corners of the six surfaces forms eight different vertices
iv. Each of the six surfaces is roughly perpendicular to an edge of another surface that is in contact therewith

When the above-mentioned conditions are all satisfied, the shape characteristic specification unit 113 determines that the shape characteristic of the shape 1010 is a rectangular object.

The specific technology for the above-mentioned determination is the same as that described above, and hence a description thereof is omitted here. Further, the determination whether or not each of the six surfaces includes four corners may be carried out by determining whether or not, for a given group, a vertex that is shared by adjacent polygon meshes is located on or near a periphery of the surface formed by the group, and whether or not there are four such vertices in the group, for example.

A shape 1020 indicates the shape information for defining a rectangular object when it is determined that the shape characteristic of the shape 1010 is a rectangular object. The shape information specification unit 114 specifies the following, for example, as rectangular object shape information.
- Origin of the local coordinate system
- Vertex of the diagonal based on the local coordinate system

The origin of the local coordinate system is a position in a coordinate system for specifying the position of the rectangular object. For example, the origin of the local coordinate system is the xyz coordinates of any one of the eight vertices, or of a point near to those vertices. For the shape 1020, the origin of the local coordinate system is, for example, the xyz coordinates of the coordinate system mx. The vertex of the diagonal based on the local coordinate system is, for example, among the eight vertices, the xyz coordinates of a vertex positioned on the diagonal of the vertex based on the local coordinate system, or of a point near to the vertex. For the shape 1020, the vertex of the diagonal based on the local coordinate system is the xyz coordinates of the vertex P.

Depending on the data in the three-dimensional model storage unit 121, the characteristics of the structure, and the like, a plurality of shape characteristics can be included in one graph network. For example, both a cylinder shape characteristic and a ring shape characteristic may be included in a single graph network. In such a case, one shape characteristic may be specified first, and the other shape characteristic may be specified from polygon meshes from which the data matching the specified shape characteristic has been excluded. Examples of the technology for specifying one shape characteristic frompolygon meshes that include a plurality of shape characteristics include, but are not especially limited to, specifying from a characteristic amount of the polygon meshes. Such a technology is publicly known, and hence a detailed description thereof is omitted here. However, for example, the characteristic amount may be calculated from characteristics such as the distribution, the magnitude, and the distance of the center of gravity in the x-direction, the y-direction, and the z-direction of the vertices of a portion of a point group acquirable from the edges, vertices, faces, and the like of the polygon meshes, and based on this characteristic amount, the polygon meshes specifying one shape characteristic may be specified. Further, the shape characteristic may also be specified by other arbitrary technologies.

Although, in the above description, the determination of the shape characteristic is performed in order of a cylinder, a ring, a cone, and a rectangular object, the determination order is not limited thereto. Further, for example, the determination order may be changed based on the type, characteristic amount, and the like of the structure.

Further, in this embodiment, the conditions for specifying the shape characteristic are represented as data in the rule storage unit 123, and the shape characteristic specification unit 113 specifies the shape characteristic based on the data in the rule storage unit 123. However, the present invention is not limited thereto. For example, an algorithm and the like for specifying the shape characteristic may be included in advance in the shape characteristic specification unit 113.

In addition, the shape information specified by the shape information specification unit 114 is an example. The shape information is not limited to the example described above.

Returning to FIG. 4, for each shape characteristic specified by the processing of Step S403, the orientation specification unit 115 acquires a three-dimensional measurement value matching the position of the shape characteristic from the three-dimensional measurement value storage unit 122 (S404). To carry out this processing, for each shape characteristic, the orientation specification unit 115 acquires a three-dimensional measurement value corresponding to the position of the shape characteristic from the shape information. More specifically, based on a publicly known technology, the orientation specification unit 115 may align the coordinate system origin of the shape information acquired in Step S403 and the coordinate system origin of the three-dimensional measurement value in the three-dimensional measurement value storage unit 122, and based on the aligned coordinate systems, acquire the matching three-dimensional measurement value.

Next, the orientation specification unit 115 calculates the distance between the measurement value acquired by the processing of Step S404 and the structure matching the shape characteristic and the shape information (S405). To calculate this distance, for example, the orientation specification unit 115 calculates the minimum distance from each measurement value acquired by the processing of Step S404 to the polygon meshes or the three-dimensional model matching the shape characteristic and the shape information specified by the processing of Step S403.

Next, the orientation specification unit 115 determines whether or not the structure exists (S406). Specifically, the orientation specification unit 115 determines whether or not the structure matching the shape characteristic and the shape information exists based on the distance between the three-dimensional measurement value and the structure. Examples of how this processing can be carried out include, but are not especially limited to, determining whether or not a total and the like of the distance between each measurement value calculated by the above-mentioned processing and the structure matching the shape characteristic and the shape information exceeds an arbitrary threshold. This threshold may be set based on the type, volume, and surface area of the structure, the shape characteristic, the accuracy of the measurement value, the accuracy of the three-dimensional model, and the like. The orientation specification unit 115 marks each measurement value with a label indicating whether or not the measurement value corresponds to a structure matching the shape characteristic and the shape information, and stores the labeled measurement values in an arbitrary storage area of the storage unit 120.

Alternatively, the orientation specification unit 115 may also determine that the structure does not exist if the distance between the measurement value calculated by the above-mentioned processing and the structure matching the shape characteristic and the shape information exceeds the predetermined threshold and also exceeds another predetermined threshold. Similarly to the above, those thresholds may be set based on, for example, the type, volume, and surface area of the structure, the shape characteristic, the accuracy of the measurement value, the accuracy of the three-dimensional model, and the like.

When it is determined in Step S406 that the structure exists (S406: Yes), the orientation specification unit 115 specifies the orientation of the structure matching the shape characteristic and the shape information based on the distance calculated in Step S405 (S407). To carry out this processing, the orientation specification unit 115 generates a distance function for calculating the total and the like of the distance between each measurement value and the structure matching the shape characteristic and the shape information, and calculates the orientation of the structure so that the value of this function is at a minimum.

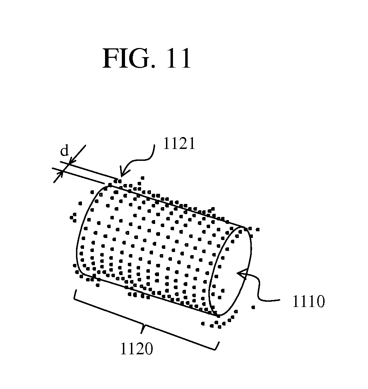

A specific example of the processing of Step S407 is now described in more detail. FIG. 11 illustrates a distance from a measurement value and specifying an orientation of a structure.

A shape 1110 is an example of a structure whose shape characteristic is a cylinder. A point group 1120 is an example of a three-dimensional measurement value group acquired in Step S405 and corresponding to the position of the shape 1110. The model generation unit 116 calculates the minimum distance from each measurement point of the point group 1120 to the shape 1110. For example, the orientation specification unit 115 calculates a minimum distance d between a measurement point 1121 and the shape 1110. The orientation specification unit 115 performs this processing for each measurement point.

The orientation specification unit 115 specifies the orientation of the shape 1110 so that the total and the like of the distance as described above is at a minimum. To carry out this processing, the orientation specification unit 115 generates a distance function for calculating the distance from each measurement point of the measurement point group 1120 to the shape 1110, and calculates the position, angle, and the like of the shape 1110 so that the value of this function is at a minimum.

Moreover, the orientation specification unit 115 may also acquire a correction value of the shape information acquired in Step S403. To carry out this processing, for example, the orientation specification unit 115 may calculate information and the like relating to the structure, namely, diameter, points, position in a coordinate system, and the like, so that the value of the distance function for calculating the total and the like of the distance between each measurement value and the structure is at a minimum.

Returning to FIG. 4, the model generation unit 116 generates a new three-dimensional model (S408). To carry out this processing, for example, the model generation unit 116 generates a three-dimensional model based on the orientation acquired in Step S407 and the shape characteristic and the shape information acquired in Step S403, and stores the generated three-dimensional model in an arbitrary storage area of the storage unit 120 and the like. If a correction value of the shape information is acquired by this processing, the model generation unit 116 generates the three-dimensional model based on the correction value.

When it is determined in Step S406 that the structure does not exist (S406: Yes), the processing on the structure is finished.

The above-mentioned processing can be performed on each structure. The unit of the structure subjected to the above-mentioned processing is arbitrary. For example, the processing may be carried out on each of a plurality of components (structures) forming one structure. Alternatively, even for a single structure that is formed from a plurality of structures, the processing may be carried out on the single structure as one processing unit.

The output unit 140 can output each piece of information generated by the above-mentioned processing at an arbitrary timing. This output information can be generated by an arbitrary configuration of the three-dimensional model generation apparatus 100.

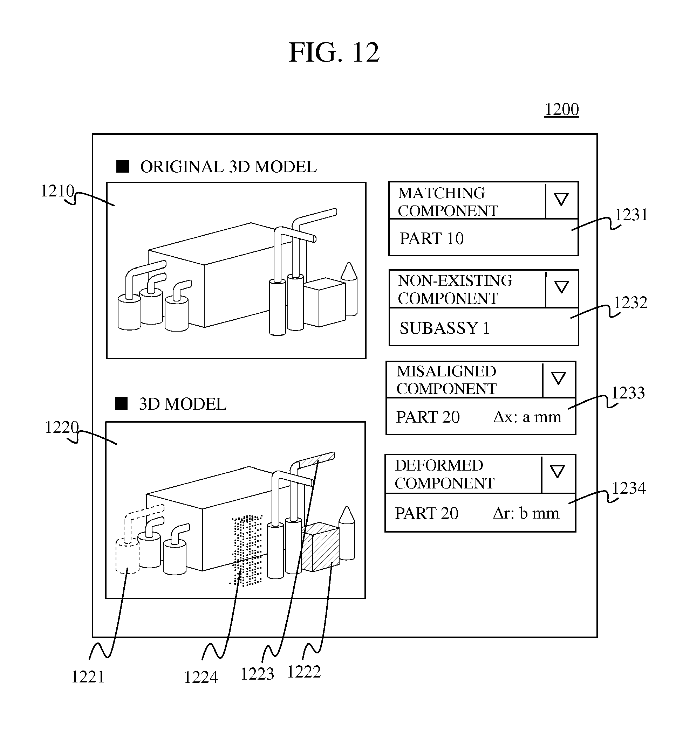

The information to be output by the output unit 140 is not especially limited, as long as the information is obtained by the above-mentioned processing. Examples include the three-dimensional model generated in Step S408 and a determination result regarding whether or not a component exists. FIG. 12 is an example of a screen to be output.

A screen 1200 includes an area 1210, an area 1220, an area 1231, an area 1232, an area 1233, an area 1234, and the like.

A three-dimensional model stored in the three-dimensional model storage unit 121 is displayed in the area 1210. The three-dimensional model generated in Step S408, for example, is displayed in the area 1220. In addition, the area 1220 also displays in different display formats a non-existing structure, a structure that does exist but has a different position and/or orientation from the original three-dimensional model, a measurement value that does not correspond to the original three-dimensional model, and the like. For example, a structure 1221 is a non-existing structure. Structures 1222 and 1223 are structures that do exist, but have a different position and/or orientation from the original three-dimensional model. A dot cluster 1224 is a cluster of measurement values that do not correspond to the original three-dimensional model.

Identification information and the like about a structure that does exist are displayed in the area 1231. Identification information and the like about a non-existing structure are displayed in the area 1232. Identification information about a structure that does exist, but has a different position and/or orientation from the original three-dimensional model, and a deviation amount thereof and the like are displayed in the area 1233. Identification information about a structure that does exist, but has different dimensions and the like from the original three-dimensional model, and the dimensions thereof and the like are displayed in the area 1234.

The deviation amount of a structure that does exist, but has a different position and/or orientation from the original three-dimensional model, may be, for example, a deviation amount of the xyz values at an arbitrary reference point of the structure, which is acquired from the shape information acquired by the processing of Step S403 and the orientation acquired by the processing of Step S407. Further, the dimensions of a structure that does exist, but has different dimensions and the like from the original three-dimensional model, may be values obtained from the shape information acquired by the processing of Step S403 and a correction value and the like of the shape information.

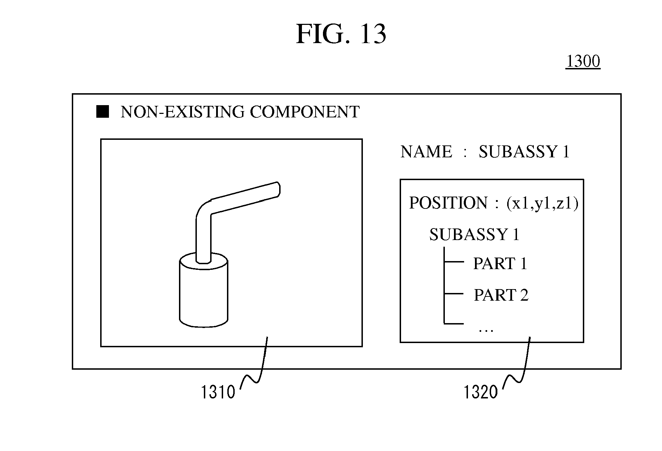

FIG. 13 is an example of a screen displaying detailed information. A screen 1300 is an example displaying a non-existing structure.

The screen 1300 has an area 1310 and an area 1320, for example. The area 1310 displays a three-dimensional model of a non-existing structure. The area 1320 displays information relating to the non-existing structure, such as the dimensions and position of the structure and its parent-child relationship.

The dimensions, position, and the like of the structure can be acquired from the shape information and the like acquired by the processing of Step S403. The structure parent-child relationship can be acquired from information stored in the three-dimensional model storage unit 121 or in another arbitrary storage unit.

Although the screen 1300 is an example displaying a non-existing structure, various other arbitrary structures, such as a structure that exists and a structure that does exist but has a different position and/or orientation from the original three-dimensional model, may be displayed in a similar manner.

In the above, the embodiment of the present invention is described. Based on the technologies described above, a three-dimensional model can be generated from measured data.

For example, there may be a case in which although a three-dimensional model was generated during the design stage, due to design changes that occurred during the manufacturing, production, and construction processes, the structure that is actually manufactured, produced, and constructed does not match the three-dimensional model generated at the design stage. For changing or fixing such a structure, for example, a three-dimensional model may be needed for simulation of the workability, strength design, and the like at the design stage. With the three-dimensional model generation apparatus 100 according to this embodiment, even in such a case, a three-dimensional model of the structure that is actually manufactured, produced, and constructed can be generated by using the original three-dimensional model and a measurement value of the structure.

Further, in this embodiment, a structure that exists in the three-dimensional model but does not match any measurement values can be specified.

Still further, in this embodiment, a structure that exists in the three-dimensional model but has at least any one of a position, orientation, dimensions, and the like that is different from the measurement values can be specified.

Moreover, the segment connections are defined by a graph network, and hence the segment connection relationship can be easily defined.

Although the embodiment of the present invention invented by the inventors has been specifically described above, the present invention is not limited to the above-mentioned embodiment. It should be understood that various modifications can be made within the scope of the gist of the present invention. For example, although the above-mentioned embodiment has been described in detail to facilitate understanding of the present invention, the present invention is not necessarily limited to a configuration in which all of the configurations described above are included. Further, a part of the configurations of a given embodiment of the present invention may be substituted with configurations from another embodiment. Still further, configurations from another embodiment may be added to the configurations of a given embodiment of the present invention. In addition, a part of the configurations of each embodiment of the present invention may be added to, deleted from, or substituted with other configurations.

Further, in the drawings, although the control lines and the information lines considered to be necessary for describing the present invention are illustrated, not all of the control lines and information lines that are in fact included are illustrated. It may be considered that in actual practice almost all configurations are interconnected.

## Claims

1. A three-dimensional model generation apparatus, comprising:
a storage unit which stores a three-dimensional model of a structure and a three-dimensional measurement value of the structure;
a segment generation unit which generates a plurality of segments by dividing the three-dimensional model;
a connection relationship specification unit which specifies a connection relationship of the generated plurality of segments;
a shape characteristic specification unit which specifies, based on a part of the plurality of segments and other segments of the plurality of segments specified by the connection relationship and connected to the part of the plurality of segments, a shape characteristic of the three-dimensional model formed from the plurality of segments;
a shape information specification unit which specifies shape information defining the specified shape characteristic;
an orientation specification unit which specifies an orientation of the structure based on a distance between a structure matching the specified shape characteristic and the specified shape information, and the three-dimensional measurement value; and
a model generation unit which generates a three-dimensional model based on the specified shape characteristic, the specified shape information, and the specified orientation.

2. A three-dimensional model generation apparatus according to claim 1, wherein the connection relationship specification unit represents the connection relationship of the plurality of segments in a graph network.

3. A three-dimensional model generation apparatus according to claim 1, wherein the shape characteristic specification unit specifies the shape characteristic based on a surface formed from the part of the plurality of segments and a characteristic section formed from the other segments of the plurality of segments.

4. A three-dimensional model generation apparatus according to claim 3, wherein the characteristic section comprises at least one of a line, another surface, or a point.

5. A three-dimensional model generation apparatus according to claim 1, further comprising an output unit which outputs the generated three-dimensional model.

6. A three-dimensional model generation apparatus according to claim 1, wherein the orientation specification unit determines whether or not there is a measurement value matching the structure based on a distance between the structure matching the specified shape characteristic and the specified shape information and the measurement value, and when it is determined that there is no matching measurement value, determines that a portion of the three-dimensional model that matches the structure does not exist.

7. A three-dimensional model generation apparatus according to claim 1, wherein the shape characteristic specification unit determines that the shape characteristic of the three-dimensional model formed from the plurality of segments is a cylinder when there are two roughly circular surfaces formed from the plurality of segments, the two roughly circular surfaces are roughly parallel, and the two roughly circular surfaces have roughly the same diameter dimension.

8. A three-dimensional model generation apparatus according to claim 1, wherein the shape characteristic specification unit determines that the shape characteristic of the three-dimensional model formed from the plurality of segments is a ring when there are two roughly circular surfaces formed from the plurality of segments, the two roughly circular surfaces have roughly the same diameter dimension, the two roughly circular surfaces are not parallel, one of the two roughly circular surfaces is roughly parallel to a z-axis direction in a local coordinate system that is defined based on the one of the two roughly circular surfaces, and a center of another of the two roughly circular surfaces is located roughly on an x-axis in the local coordinate system.

9. A three-dimensional model generation apparatus according to claim 1, wherein the shape characteristic specification unit determines that the shape characteristic of the three-dimensional model formed from the plurality of segments is a rectangular object when there are six roughly rectangular surfaces formed from the plurality of segments, each of the six roughly rectangular surfaces includes a vertex of four other roughly rectangular surfaces of the six roughly rectangular surfaces, eight different vertices are formed by the six roughly rectangular surfaces, and each of the six roughly rectangular surfaces is roughly perpendicular to an edge of an adjacent roughly rectangular surface among the six roughly rectangular surfaces.

10. A three-dimensional model generation apparatus according to claim 1, wherein the shape characteristic specification unit determines that the shape characteristic of the three-dimensional model formed from the plurality of segments is a cone when there is a roughly circular surface formed from the plurality of segments, a plurality of segments having a connection relationship with the roughly circular surface are not a surface, and a plurality of triangular segments having a connection relationship with the roughly circular surface have one common vertex.

11. A method of generating a three-dimensional model with a three-dimensional model generation apparatus,
the three-dimensional model generation apparatus comprising a storage unit which stores a three-dimensional model of a structure and a three-dimensional measurement value of the structure,
the method comprising:
generating a plurality of segments by dividing the three-dimensional model;
specifying a connection relationship of the generated plurality of segments;
specifying, based on a part of the plurality of segments and other segments of the plurality of segments specified by the connection relationship and connected to the part of the plurality of segments, a shape characteristic of the three-dimensional model formed from the plurality of segments;
specifying shape information defining the specified shape characteristic;
specifying an orientation of the structure based on a distance between a structure matching the specified shape characteristic and the specified shape information, and the measurement value; and
generating a three-dimensional model based on the specified shape characteristic, the specified shape information, and the specified orientation.

12. A computer-readable program to be executed by a computer,
the computer comprising a storage device and an arithmetic device,
the storage device being configured to store a three-dimensional model of a structure and a three-dimensional measurement value of the structure,
when executed by the computer, the program causing the computer to function as:
a segment generation unit which generates a plurality of segments by dividing the three-dimensional model;
a connection relationship specification unit which specifies a connection relationship of the generated plurality of segments;
a shape characteristic specification unit which specifies, based on a part of the plurality of segments and other segments of the plurality of segments specified by the connection relationship and connected to the part of the plurality of segments, a shape characteristic of the three-dimensional model formed from the plurality of segments;
a shape information specification unit which specifies shape information defining the specified shape characteristic;
an orientation specification unit which specifies an orientation of the structure based on a distance between a structure matching the specified shape characteristic and the specified shape information, and the measurement value; and
a model generation unit which generates a three-dimensional model based on the specified shape characteristic, the specified shape information, and the specified orientation.
